# EUROPÄISCHE PATENTSCHRIFT

(11) **EP 2 838 820 B1**
(45) Veröffentlichungstag und Bekanntmachung des Hinweises auf die Patenterteilung: **05.04.2017**
(21) Anmeldenummer: 14714912.4
(22) Anmeldetag: 10.02.2014
(51) Int. Cl.: B65G 47/91, B65G 59/00, B65G 49/06

(54) **VORRICHTUNG UND VERFAHREN ZUM ENTNEHMEN PLATTENFÖRMIGER GEGENSTÄNDE**
DEVICE AND METHOD FOR REMOVING PLANAR OBJECTS
DISPOSITIF ET PROCÉDÉ PERMETTANT DE PRÉLEVER DES OBJETS EN FORME DE PLAQUE

(30) Priorität: 08.03.2013 AT 1862013
(43) Veröffentlichungstag der Anmeldung: 25.02.2015
(73) Patentinhaber: LISEC Austria GmbH, 3353 Seitenstetten (AT)
(72) Erfinder: ENDLICHER, Hannes, A-3390 Melk an der Donau (AT)
(74) Vertreter: Beer & Partner Patentanwälte KG
(86) Internationale Anmeldenummer: PCT/AT2014/000029
(87) Internationale Veröffentlichungsnummer: WO 2014/134641

(56) Entgegenhaltungen:
- EP-A1- 0 519 447
- EP-A1- 2 070 848
- EP-A1- 2 261 145
- EP-A2- 2 261 146
- US-A- 5 632 595

## Beschreibung

Die Erfindung betrifft eine Vorrichtung zum Entnehmen plattenförmiger Gegenstände, wie Glasscheiben, von einem Gestell, an dem die Gegenstände anliegend gestapelt sind, wobei zwischen Gegenständen Abstandhalter angeordnet sind, wobei an einem Träger Halteeinrichtungen zum Entnehmen der Gegenstände angeordnet sind, wobei an dem Träger im Bereich über den Halteeinrichtungen wenigstens eine Entnahmeeinrichtung für Abstandhalter angeordnet ist, und wobei die Halteeinrichtungen und die Entnahmeeinrichtung auf der selben Seite des Trägers angeordnet sind.

Die Erfindung betrifft des Weiteren ein Verfahren zum Entnehmen plattenförmiger Gegenstände, wie Glasscheiben, von einem Gestell, an dem die Gegenstände anliegend gestapelt sind, wobei zwischen Gegenständen Abstandhalter angeordnet sind, bei dem die Gegenstände mit an einem Träger angeordneten Halteeinrichtungen vom Gestell entnommen werden.

Das erfindungsgemäße Verfahren und die erfindungsgemäße Vorrichtung können bei der Lagerung, Sortierung und dem Transport plattenförmiger Gegenstände, insbesondere Glasscheiben, Einsatz finden.

Es ist üblich, plattenförmige Gegenstände, insbesondere Glasscheiben, wenn sie in Lagern (Glaslager) bereit gehalten werden, in Stapeln auf Gestellen bzw. Lagerböcken abzustellen.

Auf den Gestellen stehen die plattenförmigen Gegenstände (Glasscheiben) zur Lotrechten um wenige Grad (beispielsweise 5°) geneigt, sodass sie sicher am Gestell lehnen.

Für das Entnehmen ("Entstapeln") des jeweils vordersten plattenförmigen Gegenstandes von einem aus solchen Gegenständen gebildeten Stapel sind mit Saugköpfen bestückte Balken ("Saugerbalken") vorgesehen. Die Saugköpfe werden an den oberen Rand eines plattenförmigen Gegenstandes (Glasscheibe) angelegt, um den jeweils vordersten Gegenstand vom Stapel abzuheben und einer weiteren Be- oder Verarbeitung zuzuführen oder an einem anderen Ort wieder abzustapeln. Beispielsweise werden Glasscheiben, die von einem Gestell abgenommen ("entstapelt") worden sind, einem Glasschneidetisch zugeführt. Es ist denkbar, mit einem Saugerbalken von mehreren nebeneinander auf demselben Gestell befindlichen gleich hohen Stapeln die jeweils vordersten plattenförmigen Gegenstände gleichzeitig zu entnehmen.

Für das Erfassen, Entnehmen und/oder Abstellen einzelner plattenförmiger Gegenstände sind auch kammartige Vorrichtungen ("Kämme") bekannt, auf deren Zinken mehrere, beispielsweise drei, Saugköpfe angeordnet sind, sodass die Glasscheiben flächig erfasst werden können. Die Kammform wird gewählt, damit verschiedene, mit Vakuumsaugern ausgestattete, Vorrichtungen zum Fördern, Lagern und Transportieren Glasscheiben übergeben können, ohne dass diese von beiden Seiten angesaugt werden müssen, was etwa für Beschichtungen schädlich wäre.

Im Sinne eines effektiven Lagerbetriebes kann es sinnvoll sein, in Form von Stapeln abgestellte plattenförmige Gegenstände nicht einzeln von den Stapeln zu entnehmen bzw. plattenförmige Gegenstände einzeln auf Stapeln abzustellen, sondern Pakete von mehreren plattenförmigen Gegenständen gleichzeitig, d.h. in einem Schritt, von Stapeln zu entnehmen bzw. auf Stapeln abzustellen.

Dabei kommen üblicherweise Ladevorrichtungen zum Einsatz, deren Haltevorrichtungen das Paket hintergreifen.

Das Entnehmen des vordersten Paketes von einem Stapel mit einer mit hintergreifenden Haltevorrichtungen ausgestatteten Ladevorrichtung ist nur möglich, wenn das vorderste Paket und das dahinter liegende Paket in einem Abstand voneinander gehalten werden. Das gleiche gilt beim Abstellen von Paketen auf einen Stapel, wenn die Pakete dabei von hintergreifenden Haltevorrichtungen gehalten werden.

Es ist daher üblich, zwischen die einzelnen Pakete plattenförmiger Gegenstände, insbesondere Glasscheiben, beim Abstellen auf Stapeln Abstandhalter einzubringen, die dafür sorgen, dass beim Entnehmen des jeweils vordersten Paketes plattenförmiger Gegenstände vom Stapel der notwendige Abstand zum dahinter befindlichen Paket eingehalten wird. Der nötige Abstand beträgt in der Regel einige Millimeter bis einige Zentimeter.

Derartige Abstandhalter können beispielsweise aus Schaumstoff, Wellpappe, Hohlkartonelementen, Kartonwabenplatten, Wellkarton oder ähnlichem gefertigt sein.

Zur Entnahme einzelner plattenförmiger Gegenstände aus einem aus Paketen, die voneinander jeweils durch Abstandhalter in Abstand gehalten werden, gebildeten Stapel, können die oben beschriebenen, mit Saugköpfen bestückten Saugerbalken oder Kämme eingesetzt werden.

Dabei besteht das Problem, dass die Abstandhalter, die zwischen die Pakete plattenförmiger Gegenstände eingeführt worden sind, entfernt werden müssen, bevor der jeweils dahinter stehende plattenförmige Gegenstand eines Paketes entnommen werden kann.

Vorrichtungen zum Entfernen derartiger Abstandhalter sind aus der EP 2 070 848 A1 und der EP 2 261 145 A1 bekannt.

Die EP 2 368 820 A zeigt und beschreibt eine Vorrichtung und ein Verfahren zum Entnehmen plattenförmiger Gegenstände, wobei einem Greifer mit Saugköpfen eine mit Dornen versehene Leiste zum Entnehmen von Abstandhaltern zugeordnet ist. Die Leiste mit den Dornen ist zwischen einer zurückgezogenen Bereitschaftslage und einer Wirkstellung verstellbar, wobei die Dorne in der Wirkstellung durch einen Antrieb in den Abstandhalter eingedrückt werden.

Für das Betätigen der Leiste mit den Dornen ist eine Anordnung mit pneumatischen Zylindern vorgesehen. Die Saugköpfe und die mit Dornen bestückte Leiste weisen in entgegengesetzte Richtungen. Daher ist die Anordnung aus Saugköpfen und Leiste um eine lotrechte Achse verdrehbar angelegt, damit wahlweise die Saugköpfe oder die Leiste mit den Dornen verwendet werden können.

Die EP 2 261 146 A zeigt - abgesehen davon, dass für das Entnehmen von Abstandhaltern Greifer vorgesehen sind - eine Vorrichtung, die jener der EP 2 368 820 A entspricht.

Die EP 0 519 447 A1 zeigt und beschreibt Abstandhalter für auf einem Gestell abgestellte Glastafeln. Die Abstandhalter sind zwischen den oberen Randbereichen von Glastafeln eingefügt und erstrecken sich nicht über die gesamte Höhe der Vorderseite der Glastafeln. Die Abstandhalter weisen einen magnetisierbaren Teil auf. Wenn eine Glastafel mit Hilfe eines Saugerfeldes von dem Stapel entnommen wird, wird ein am Träger des Saugerfeldes vorgesehener magnetischer Halter (magnetic holder) aktiv und nimmt den Abstandhalter mit. Die Sauger und der magnetische Halter weisen auf die selbe Seite.

Aus der US 5,632,595 A ist eine Vorrichtung zum Entnehmen von Glastafeln aus einem Stapel mit zwischen den Glastafeln angeordneten Abstandhaltern bekannt. Diese Vorrichtung umfasst erste Sauger für die Glastafel und zweite Sauger für die Abstandhalter. Die zweiten Sauger können für den Fall, dass die Abstandhalter magnetisierbar sind, durch Elektromagnete ersetzt werden. Die ersten und die zweiten Sauger weisen in die selbe Richtung.

Nachteilig an den bekannten Vorrichtungen ist, dass die Entnahme einzelner plattenförmiger Gegenstände aus dem Stapel und das Entfernen der Abstandhalter nicht gleichzeitig erfolgen kann, sondern nacheinander durchgeführt werden muss.

Der Erfindung liegt daher die Aufgabe zugrunde, eine Vorrichtung und ein Verfahren der eingangs genannten Art zu schaffen, mit der bzw. dem die Entnahme einzelner plattenförmiger Gegenstände aus dem Stapel und das Entfernen der Abstandhalter gleichzeitig erfolgen können.

Gelöst wird diese Aufgabe erfindungsgemäß mit einer Vorrichtung mit den Merkmalen des Anspruchs 1.

Gelöst wird diese Aufgabe des Weiteren erfindungsgemäß mit einem Verfahren gemäß Anspruch 7.

Bevorzugte und vorteilhafte Ausgestaltungen der Erfindung sind Gegenstand der Unteransprüche.

Mit der Erfindung wird die Möglichkeit geschaffen, gleichzeitig einzelne plattenförmige Gegenstände aus einem Stapel zu entnehmen und die Abstandhalter zu entfernen.

Die Erfindung stellt weiters sicher, dass die Abstandhalter nicht verrutschen oder vom vordersten plattenförmigen Gegenstand eines Stapels abgleiten und von den Mitteln zum Entfernen der Abstandhalter nicht mehr erfasst werden können, da die Abstandhalter zwischen zwei plattenförmigen Gegenständen eingeklemmt sind bis die Entnahmeeinrichtung sie erfasst und dann von dieser gehalten und mit dem plattenförmigen Gegenstand, insbesondere der Glastafel, aus dem Gestell entnommen werden.

Dies ist möglich, da bei der erfindungsgemäßen Vorrichtung vorgesehen ist, dass an dem Träger im Bereich über den Halteeinrichtungen wenigstens eine Entnahmeeinrichtung für Abstandhalter angeordnet ist, und da die Halteeinrichtungen und die Entnahmeeinrichtung auf der selben Seite des Trägers angeordnet sind, also die Mittel zum Entfernen der Abstandhalter auf der Vorderseite eines Saugerbalkens oder Kammes angebracht sind, wobei man unter der Vorderseite des Saugerbalkens oder Kammes die Seite versteht, zu der hin die Sauger offen sind, also die Seite, die beim Halten eines plattenförmigen Gegenstandes zu diesem plattenförmigen Gegenstand weist.

Die erfindungsgemäße Entnahmeeinrichtung zum Entfernen der Abstandhalter kann beispielsweise als oberhalb der Saugerreihe des Saugerbalkens bzw. oberhalb der obersten Saugerreihe eines Kammes angebrachte sein, und zwar z.B. als Anordnung von nagelartigen Spießen oder Stiften, deren Spitzen in einer zur Ebene der Sauger parallelen Ebene liegen, und die normal zur Ebene der Sauger linear so verschoben werden kann, dass die Normalkomponente der Verschiebebewegung bezüglich der Ebene der Sauger von Null verschieden ist. Unter der Ebene der Sauger ist dabei die der saugerseitigen Oberfläche eines vom Saugerbalken bzw. Kamm erfassten plattenförmigen Gegenstandes entsprechende Ebene zu verstehen. Das Ergreifen eines Abstandhalters erfolgt durch Linearbewegung einer z.B. als Nagelleiste ausgeführten Halteeinrichtung, indem der Abstandhalter von den Stiften oder Nägeln der Leiste durchstochen und fest gehalten wird. Die Leiste ist weiters mit einer Stützeinrichtung z.B. in Form einer gelochten Platte ausgestattet, welche die Basis der z.B. U-förmigen Profilschiene sein kann und die relativ zur Profilschiene entlang der Stifte oder Nägel bewegt werden kann. Aufgespießte Abstandhalter werden durch eine Vorwärtsbewegung der Profilschiene oder eine Rückwärtsbewegung der Stifte bzw. Nägel von diesen abgestreift.

In einer möglichen Ausführungsform der Erfindung kann vorgesehen sein, dass zwei oder mehrere Leisten nebeneinander angeordnet sind, dass die Eindringkörper an ihrem freien Ende Widerhaken aufweisen, dass an der Halterung wenigstens ein Antrieb zum Verschieben der Leiste mit den Eindringkörpern angeordnet ist, dass die Stützeinrichtung gegenüber der Halterung verschiebbar ist, dass mehrere Halteeinrichtungen am Träger in einer Reihe angeordnet sind und dass die Halteeinrichtungen Saugnäpfe sind.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen.

Es zeigt:
- Fig. 1: eine stark schematisierte Seitenansicht einer erfindungsgemäßen Vorrichtung,
- Fig. 2: ein Detail der Vorrichtung von Fig. 1 in Schrägansicht,
- Fig. 3: ein weiters Detail von Fig. 1 in vergrößertem Maßstab,
- Fig. 4: eine alternative Ausführungsform der Erfindung und
- Fig. 5: eine gegenüber der Ausführungsform der Fig. 4 erweiterte Ausführungsform der Erfindung von der Seite.

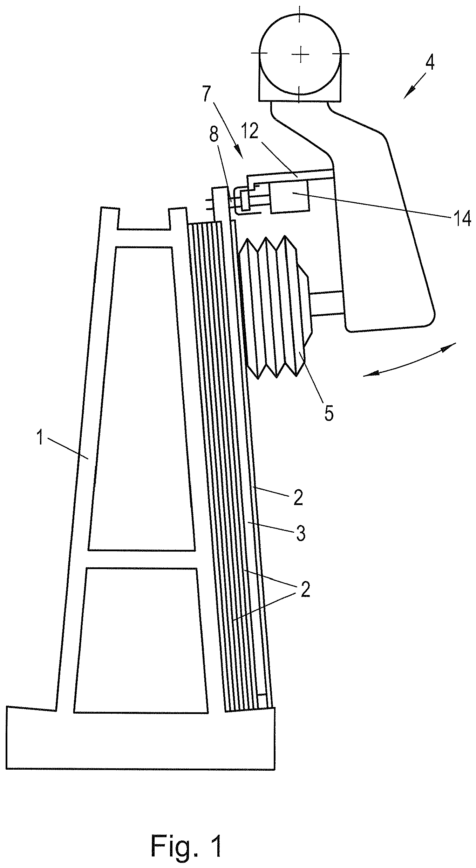

Fig. 1 zeigt beispielhaft eine erste Ausführungsform einer erfindungsgemäßen Vorrichtung mit einem Gestell 1, an dem plattenförmige Gegenstände 2, z.B. Glastafeln, in einer zur lotrechten, etwas geneigten Stellung gestapelt sind. Der Winkel, in dem die Gegenstände 2 geneigt sind, beträgt üblicherweise etwa 50, kann aber auch größer oder kleiner sein. Die Erfindung wäre aber auch für liegende plattenförmige Gegenstände 2 anwendbar.

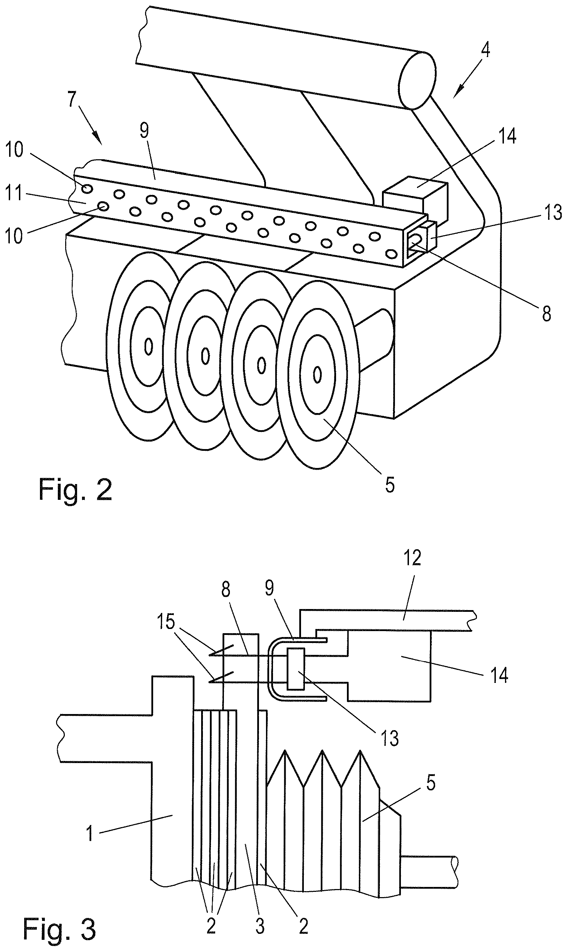

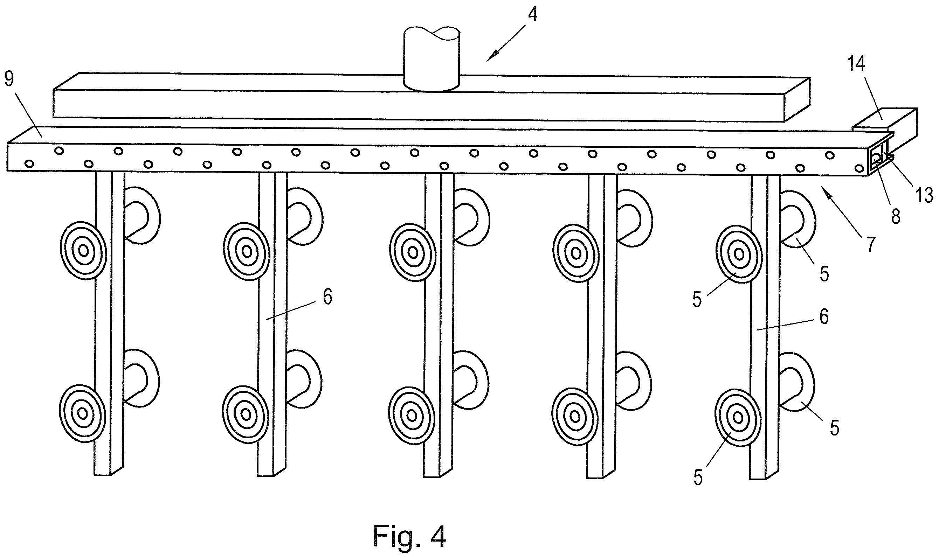

Um die Gegenstände 2 aus dem Gestell 1 zu entnehmen, können im Stand der Technik an sich bekannte Träger 4 mit Halteeinrichtungen 5, z.B. Saugnäpfen, verwendet werden. Die Saugnäpfe 5 können am Träger 4 in Reihe angeordnet sein, wie in beispielhaft in Fig. 2 dargestellt ist oder an kammartigen Zinken 6, die am Träger angeordnet sind, wie beispielhaft in Fig. 4 dargestellt ist. Für die Erfindung ist aber weder die konkrete Ausführungsform der Halteeinrichtung in Form von Saugnäpfen 5, noch die Lage bzw. Anordnung der Saugnäpfe 5 am Träger 4 wesentlich, und diese könnten im Rahmen der Erfindung auch anders gestaltet sein. Die in den Zeichnungen dargestellten Ausführungsformen sind allerdings bevorzugt.

Einzelne Gegenstände 2 oder Gruppen bzw. Pakete von Gegenständen 2 können voneinander mittels Abstandhaltern 3 getrennt sein. Diese müssen bei der Entnahme des letzen darauf liegenden Gegenstandes 2 ebenfalls abgenommen werden, damit der darunter liegende Gegenstand 2 ungehindert entnommen werden kann.

Damit die Entnahme der Abstandhalter 3 automatisiert und ohne zusätzlichen Arbeitsschritt durchgeführt werden kann, ist am Träger 4 wenigstens eine Entnahmeeinrichtung 7 für die Abstandhalter 3 angeordnet, die wenigstens einen Eindringkörper 8 für die Abstandhalter 3 aufweist.

In den in den Zeichnungen dargestellten, bevorzugten Ausführungsformen der Erfindung weist die Entnahmeeinrichtung 7 eine U-förmige Profilschiene 9 auf, an deren Basis 11 eine Vielzahl von Löchern 10 angebracht ist, durch die eine entsprechende Anzahl von Eindringkörpern 8 verschiebbar sind. Bevorzugt sind zwei Reihen von Löchern 10 vorgesehen, wobei die Löcher 10 der beiden Reihen zueinander versetzt sind. Die Profilschiene 9 kann entweder über die gesamte Breite des Trägers 4 verlaufen, sich also im Wesentlichen über die gleich Breite erstrecken wie die Saugnäpfe 5, oder es sind zwei oder mehr als zwei Profilschienen 9 vorgesehen, die sich dann jeweils nur über einen Teil dieser Breite erstrecken.

Die erste Variante hat den Vorteil, dass alle Abstandhalter 3 sicher erfasst werden, egal wo sie sich befinden. Die andere Variante hat den Vorteil einer jeweils kleineren Baugröße, wobei sich die Profilschienen 9 nur dort befinden müssen, wo üblicherweise die Abstandhalter 3 angeordnet sind.

In der dargestellten Ausführungsform der Erfindung ist die Profilschiene 9 über eine Halterung 12 fest am Träger 4 angebracht und die Eindringkörper 8 sind gegenüber der Profilschiene 9 verschiebbar. Dazu sind die Eindringkörper 8 an einer Leiste 13 befestigt, die von Antrieben 14, vorzugsweise jeweils einem Antrieb 14 am Ende der jeweiligen Profilschiene 9 bzw. Entnahmeeinrichtung 7, vor und zurück geschoben werden.

Wenn ein plattenförmiger Gegenstand 2, z.B. eine Glastafel, unter bzw. hinter dem sich ein Abstandhalter 3 befindet, wie dies in den Fig. 1 und 2 dargestellt ist, entnommen wird, werden die Saugnäpfe 5 wie dargestellt an die vorderste Glastafel 2 angelegt und dann auf an sich bekannte Weise durch Anlegen von Unterdruck an der Glastafel 2 festgelegt. Die Eindringkörper 8 befinden sich dabei in der in Fig. 2 dargestellten, zurückgezogenen Stellung. Gleichzeitig mit dem Anlegen von Unterdruck oder daran anschließend werden die Antriebe 14 betätigt, sodass die Eindringkörper 8 in die Abstandhalter 3 eindringen. Dies ist in den Fig. 1 und 3 dargestellt. Bei dieser erfindungsgemäßen Durchführungsform der Erfindung werden die Abstandhalter 3 erfasst, während sie noch von der vordersten Glastafel 2 festgehalten werden, wodurch sie in Position gehalten werden und während des Erfassens durch die Eindringkörper 8 und der Entnahme daher weder verrutschen noch herabfallen können.

Die Eindringkörper 8 sind bevorzugt Stifte, Nägel oder dergleichen, die bevorzugt so lange sind, dass sie die Abstandhalter 3 ganz durchdringen. Damit die Eindringkörper 8 nicht unbeabsichtigt wieder aus den Abstandhaltern 3 herausgezogen werden und die Abstandhalter 3 somit von der Entnahmeeinrichtung 7 rutschen, ist es weiters bevorzugt, wenn die Eindringkörper 8 wenigstens an ihrem freien Ende bzw. ihrer Spitze einen Widerhaken 15 oder dergleichen aufweisen. In den Eindringkörpern 8 können zusätzlich oder alternativ auch eine oder mehrere, über dessen Länge verteilte Kerben oder dergleichen angebracht sein, um ein unbeabsichtigtes Abrutschen zu vermeiden.

Nachdem die Glastafel 2 gemeinsam mit den Abstandhaltern 3 aus dem Gestell 1 entnommen wurde, kann die Leiste 13 an geeigneter Stelle, beispielsweise über einem dafür vorgesehenen Sammelbehälter, von den Antrieben 14 zurückgezogen werden, womit die Eindringkörper 8 aus den Abstandhaltern 3 herausgezogen werden. Da die Eindringkörper 8 wie beschrieben bevorzugt mit Widerhaken 15 oder dergleichen ausgestattet sind, wirkt die Basis 11 der Profilschiene 9 als eine Stützeinrichtung für die Abstandhalter 3, sodass die Eindringkörper sicher aus den Abstandhaltern 3 herausgezogen werden können.

Alternativ wäre es bei der Erfindung auch möglich, nicht (nur) die Eindringkörper 8 vor und zurück zu schieben sondern (auch) die Profilschiene 7 vor und zurück zu verschieben, um die Abstandhalter 3 von den Eindringkörpern 8 abzustreifen. Damit könnte eine Kippbewegung der Abstandhalter 3 während des Abstreifens um die Oberkante der Glastafel 2 vermieden werden.

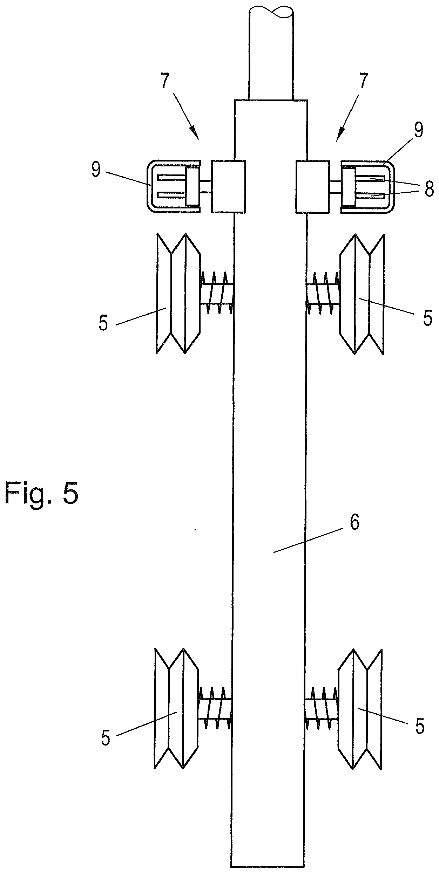

In den Fig. 4 und 5 ist eine Ausführungsform der Erfindung dargestellt, bei der an den Zinken 6 des Trägers 4 beidseitig Saugnäpfe 5 angeordnet sind. Hier kann erfindungsgemäß vorgesehen sein, dass die erfindungsgemäße Entnahmeeinrichtung 7 nur an einer Seite angebracht ist, wie Fig. 4 zeigt, oder dass die erfindungsgemäße Entnahmeeinrichtung 7 an beiden Seiten angebracht ist, wie Fig. 5 zeigt. Letzteres ist selbstverständlich auch bei einer reihenförmigen Anordnung von Halteeinrichtungen 5 wie z.B. gemäß Fig 1 bis 3 möglich.

## Patentansprüche

1. Vorrichtung zum Entnehmen plattenförmiger Gegenstände (2), wie Glasscheiben, von einem Gestell (1), an dem die Gegenstände (2) anliegend gestapelt sind, wobei zwischen Gegenständen (2) Abstandhalter (3) angeordnet sind, wobei an einem Träger (4) Halteeinrichtungen (5) zum Entnehmen der Gegenstände (2) angeordnet sind, wobei an dem Träger (4) im Bereich über den Halteeinrichtungen (5) wenigstens eine Entnahmeeinrichtung (7) für Abstandhalter (3) angeordnet ist, und wobei die Halteeinrichtungen (5) und die Entnahmeeinrichtung (7) auf der selben Seite des Trägers (4) angeordnet sind, **dadurch gekennzeichnet, dass** die Entnahmeeinrichtung (7) zwei oder mehr Eindringkörper (8) für Abstandhalter (3), die an wenigstens einer, vorzugsweise im Wesentlichen horizontal ausgerichteten, Leiste (13) nebeneinander angeordnet sind, aufweist, dass die Entnahmeeinrichtung (7) eine Stützeinrichtung (11) für Abstandhalter (3) aufweist, dass die Stützeinrichtung (11) und die Eindringkörper (8) relativ zueinander verschiebbar sind, und dass die Stützeinrichtung (11) Löcher (10) aufweist, die vorzugsweise in wenigstens zwei Reihen angeordnet sind, und durch welche die Eindringkörper (8) verschiebbar sind.

2. Vorrichtung nach Anspruch 1, **dadurch gekennzeichnet, dass** die Eindringkörper (8) Stifte, Nägel oder dergleichen sind.

3. Vorrichtung nach Anspruch 1 oder 2, **dadurch gekennzeichnet, dass** die Stützeinrichtung (11) die Basis einer im Wesentlichen U-förmige Profilschiene (9) ist, die den Abstandhaltern (3) zugewandt ist.

4. Vorrichtung nach einem der Ansprüche 1 bis 3, **dadurch gekennzeichnet, dass** mehrere Halteeinrichtungen (5) am Träger (4) in einer Reihe angeordnet sind.

5. Vorrichtung nach einem der Ansprüche 1 bis 4, **dadurch gekennzeichnet, dass** der Träger (4) kammartig angeordnete Zinken (6) aufweist, an denen vorzugsweise jeweils zwei oder drei Halteeinrichtungen (5) angeordnet sind.

6. Vorrichtung nach einem der Ansprüche 1 bis 5, **dadurch gekennzeichnet, dass** am Träger (4) auf gegenüberliegenden Seiten Halteeinrichtungen (5) zum Entnehmen der Gegenstände (2) und wenigstens eine Entnahmeeinrichtung (7) für Abstandhalter (3) angeordnet sind, die wenigstens einen Eindringkörper (8) für Abstandhalter aufweist.

7. Verfahren zum Entnehmen plattenförmiger Gegenstände (2), wie Glasscheiben, von einem Gestell (1), an dem die Gegenstände (2) anliegend gestapelt sind, wobei zwischen Gegenständen (2) Abstandhalter (3) angeordnet sind, bei dem die Gegenstände (2) mit an einem Träger (4) angeordneten Halteeinrichtungen (5) vom Gestell (1) entnommen werden, **dadurch gekennzeichnet, dass** beim Entnehmen des letzten über einem Abstandhalter (3) liegenden Gegenstandes (2) wenigstens ein Eindringkörper (8) in jeden unter diesem Gegenstand (2) liegenden Abstandhalter (3) eindringt, und dass diese Abstandhalter (3) mit dem Gegenstand (2) von dem Gestell (1) entnommen werden.

8. Verfahren nach Anspruch 7, **dadurch gekennzeichnet, dass** die Eindringkörper (8) im Wesentlichen quer zur Ebene des Gegenstandes (2) verschiebbar sind und aus den Abstandhaltern (3) heraus gezogen werden, nachdem die Gegenstände (2) mit den Abstandhaltern (3) von dem Gestell (1) entnommen wurden.

9. Verfahren nach Anspruch 7 oder 8, **dadurch gekennzeichnet, dass** den Eindringkörpern (8) eine Stützeinrichtung (11) für die Abstandhalter (3) zugeordnet ist, und dass die Stützeinrichtung (11) die Abstandhalter (3) von den Eindringkörpern (8) abstreift, nachdem die Gegenstände (2) mit den Abstandhaltern (3) von dem Gestell (1) entnommen wurden.

## Claims

1. Device for removing planar objects (2), such as glass panes, from a frame (1) on which the objects (2) are stacked in abutment, wherein spacers (3) are disposed between objects (2), wherein holding devices (5) are disposed on a support (4) in order to remove the objects (2), wherein at least one removal device (7) for spacers (3) is disposed on the support (4) in the region above the holding devices (5), and wherein the holding devices (5) and the removal device (7) are disposed on the same side of the support (4), **characterized in that** the removal device (7) comprises two or more penetrating bodies (8) for spacers (3) which are disposed on at least one preferably essentially horizontally orientated strip (13) next to one another, **in that** the removal device (7) has a support assembly (11) for spacers (3), **in that** the support assembly (11) and the penetrating bodies (8) are displaceable with respect to each other, and **in that** the support assembly (11) has holes (10) which are preferably disposed in at least two rows and through which the penetrating bodies (8) can be displaced.

2. Device according to claim 1, **characterized in that** the penetrating bodies (8) are spikes, nails, or the like.

3. Device according to claim 1 or 2, **characterized in that** the support assembly (11) is the base of an essentially U-shaped profile rail (9) which faces the spacers (3).

4. Device according to any one of claims 1 to 3, **characterized in that** a plurality of holding devices (5) are disposed in a row on the support (4).

5. Device according to any one of claims 1 to 4, **characterized in that** the support (4) comprises comb-like prongs (6) on each of which two or three holding devices (5) are preferably disposed.

6. Device according to any one of claims 1 to 5, **characterized in that** holding devices (5) for removing the objects (2) and at least one removal device (7) for spacers (3) are disposed on opposite sides of the support (4), said removal device (7) comprising at least one penetrating body (8) for spacers.

7. Method for removing planar objects (2) such as glass panes from a frame (1) on which the objects (2) are stacked in abutment, wherein spacers (3) are disposed between objects (2), in which the objects (2) are removed from the frame (1) with holding devices (5) disposed on a support (4), **characterized in that** while the last object (2) lying over a spacer (3) is being removed, at least one penetrating body (8) penetrates into each of the spacers (3) lying underneath said object (2), and **in that** said spacers (3) are removed from the frame (1) with the object (2).

8. Method according to claim 7, **characterized in that** the penetrating bodies (8) are displaceable essentially transversely to the plane of the object (2) and are removed from the spacers (3) after the objects (2) with the spacers (3) have been removed from the frame (1).

9. Method according to claim 7 or 8, **characterized in that** a support assembly (11) for the spacers (3) is associated with the penetrating bodies (8), and **in that** the support assembly (11) removes the spacers (3) from the penetrating bodies (8) after the objects (2) with the spacers (3) have been removed from the frame (1).

## Revendications

1. Dispositif de prélèvement d'objets en forme de plaques (2), comme des vitres, dans un châssis (1) dans lequel les objets (2) sont empilés à plat, des écarteurs (3) étant disposés entre les objets (2), des dispositifs de retenue (5) pour le prélèvement des objets (2) étant disposés sur un support (4), au moins un dispositif de prélèvement (7) pour des écarteurs (3) étant disposé sur le support (4) dans la zone située au-dessus des dispositifs de retenue (5) et le dispositif de retenue (5) et le dispositif de prélèvement (7) étant disposés sur la même face du support (4), **caractérisé en ce que** le dispositif de prélèvement (7) présente deux ou plus corps pénétrants (8) pour des écarteurs (3), lesquels corps pénétrants sont disposés juxtaposés au niveau d'au moins une baguette (13) orientée de préférence sensiblement à l'horizontale, que le dispositif de prélèvement (7) présente un dispositif de soutien (11) pour les écarteurs (3), que le dispositif de soutien (11) et les corps pénétrants (8) sont déplaçables les uns par rapport aux autres et que le dispositif de soutien (11) présente des trous (10) qui sont disposés de préférence sur au moins deux rangées et à travers lesquels le corps pénétrants (8) peuvent être déplacés.

2. Dispositif selon la revendication 1, **caractérisé en ce que** les corps pénétrants (8) sont des pointes, des clous ou similaires.

3. Dispositif selon la revendication 1 ou 2, **caractérisé en ce que** le dispositif de soutien (11) est la base d'un rail profilé sensiblement en forme de U (9) qui est tourné vers les écarteurs (3).

4. Dispositif selon une des revendications 1 à 3, **caractérisé en ce que** plusieurs dispositifs de retenue (5) sont disposés sur une rangée sur le support (4).

5. Dispositif selon une des revendications 1 à 4, **caractérisé en ce que** le support (4) présente des dents (6) disposées en forme de peigne sur lesquelles de préférence respectivement deux ou trois dispositifs de retenue (5) sont disposés.

6. Dispositif selon une des revendications 1 à 5, **caractérisé en ce que**, au niveau du support (4), sur des faces opposées, sont disposés des dispositifs de retenue (5) pour prélever des objets (2) et au moins un dispositif de prélèvement (7) pour des écarteurs (3) qui présente au moins un corps pénétrant (8) pour des écarteurs.

7. Procédé de prélèvement d'objets en forme de plaques (2), comme des vitres, dans un châssis (1) dans lequel les objets (2) sont empilés à plat, des écarteurs (3) étant disposés entre les objets (2), dans lequel les objets (2) sont prélevés au moyen de dispositifs de retenue (5) disposés sur un support (4) dans le châssis (1), **caractérisé en ce que**, lors du prélèvement du dernier objet (2) se trouvant au-dessus d'un écarteur (3), au moins un corps pénétrant (8) pénètre dans chaque écarteur (3) se trouvant en dessous de cet objet (2) et que ces écarteurs (3) sont prélevés avec l'objet (2) dans le châssis (1).

8. Procédé selon la revendication 7, **caractérisé en ce que** les corps pénétrants (8) sont déplaçables sensiblement transversalement par rapport au plan de l'objet (2) et sont extraits des écarteurs (3) une fois que les objets (2) ont été prélevés avec les écarteurs (3) dans le châssis (1).

9. Procédé selon la revendication 7 ou 8, **caractérisé en ce qu'**est associé au corps pénétrant (8) un dispositif de soutien (11) pour les écarteurs (3) et que le dispositif de soutien (11) racle les écarteurs (3) des corps pénétrants (8) une fois que les objets (2) ont été prélevés avec les écarteurs (3) dans le châssis (1).
